# EUROPÄISCHE PATENTANMELDUNG

(11) **EP 3 168 327 A1**
(43) Veröffentlichungstag der Anmeldung: **17.05.2017**
(21) Anmeldenummer: 16197645.1
(22) Anmeldetag: 08.11.2016
(51) Int. Cl.: C23C 24/10, F01D 5/00, B23K 9/04, B23P 6/00, B23K 26/342

(54) **HALTERUNGSVORRICHTUNG FÜR EIN SUBSTRAT UND VERFAHREN ZUR BESCHICHTUNG EINER OBERSEITE EINES SUBSTRATS**

(30) Priorität: 10.11.2015 DE 102015222141
(71) Anmelder: Rolls-Royce Deutschland Ltd & Co KG, 15827 Blankenfelde-Mahlow (DE)
(72) Erfinder: SCHRÜFER, Susanne, 15806 Zossen (DE); BRÜCKNER, Frank, 01217 Dresden (DE); RIEDE, Mirko, 01159 Dresden (DE)
(74) Vertreter: Maikowski & Ninnemann Patentanwälte Partnerschaft mbB

(57) **Zusammenfassung**

Die Erfindung betrifft eine Halterungsvorrichtung (10) für ein Substrat (1) während der Ausführung eines generativen Laserverfahrens zum Aufbringen einer Beschichtung (3) umfassend Hartstoffpartikel (4), auf einer Oberseite (2) des Substrates (1) dadurch gekennzeichnet, dass
- die Wandung des Substrats (1), wenigstens im Bereich der Oberseite (2), vollständig von einer wärmeleitenden Wandung (11) der Halterungsvorrichtung (10) umgeben ist,
- die Wandung (11) der Halterungsvorrichtung (10) über die Oberseite (2) mit einem Überstand (H) hervorsteht, der mindestens in der Größenordnung der Dicke der Beschichtung (3) liegt und
- die Wandung (11) der Halterungsvorrichtung (10) senkrecht zur Oberseite (2) angeordnet ist, so dass ein laserinduziertes Beschichtungsschmelzbad durch die Wandung (11) der Halterungsvorrichtung (10) abstützbar ist und die Beschichtung (3) im horizontalen Querschnitt die Form des Substrats (1) aufweist.

Ferner betrifft die Erfindung ein Verfahren zur Beschichtung eines Substrates (1).

## Beschreibung

Die Erfindung betrifft eine Halterungsvorrichtung für ein Substrat mit den Merkmalen des Anspruchs 1 und ein Verfahren zur Beschichtung einer Oberseite eines Substrats mit den Merkmalen des Anspruchs 13.

Es ist bekannt, dass es beim Aufbringen einer Substratbeschichtung mit Hartstoffpartikeln durch ein generatives Laserverfahren zu Phasenumwandlungen kommen kann, die zu Instabilitäten führen können. Auch besteht die Herausforderung, eine gewünschte Geometrie der Beschichtung einzuhalten.

Aus der EP 0 349 501 A1 ist eine Vorrichtung bekannt, die ein generatives Laserverfahren zum Aufbringen einer Beschichtung beschreibt.

Der vorliegenden Erfindung liegt die Aufgabe zugrunde, eine verbesserte Halterungsvorrichtung und ein verbessertes Verfahren zur Beschichtung einer Oberseite eines Substrates bereitzustellen.

Diese Aufgabe wird erfindungsgemäß durch eine Anordnung mit den Merkmalen des Anspruchs 1 gelöst.

Die Halterungsvorrichtung dient der Aufnahme eines Substrats während der Ausführung eines generativen Laserverfahrens zum Aufbringen einer Hartstoffpartikel-Beschichtung auf der Oberseite des Substrats. Die Wandung des Substrats ist hierbei wenigstens im Bereich der Oberseite des Substrats vollständig von einer wärmeleitenden Wandung der Halterungsvorrichtung umgeben. Die Wandung des Substrats kann beispielsweise vollständig von der Halterungsvorrichtung eingeschlossen sein.

Dabei steht die Wandung der Halterungsvorrichtung über die Oberseite des Substrats mit einem Überstand hervor, der mindestens in der Größenordnung der anzubringenden Beschichtungsdicke liegt. Der umlaufende Überstand kann dazu dienen, der Beschichtung insbesondere im flüssigen oder plastischen Zustand während der Herstellung einen gewissen Halt zu geben. Die Wandung der Halterungsvorrichtung ist senkrecht zur Oberseite des Substrates angeordnet.

So kann durch diese Anordnung der Wandung der Halterungsvorrichtung ein laserinduziertes Beschichtungsschmelzbad auf der Oberseite des Substrats abgestützt werden. Die Beschichtung weist im horizontalen Querschnitt die Form des Substrats auf.

Da die Wandung der Halterungsvorrichtung eine wärmeleitende Wandung aufweist, kann eine gezielte Temperierung, z.B. eine gezielte Abkühlung, während des Aufbringens der Beschichtung erreicht werden.

Die Halterungsvorrichtung kann somit dazu dienen, der Beschichtung eine gewünschte geometrische Form zu verleihen und gleichzeitig durch gezieltes Wärmeabführen das Risiko einer Phasenumwandung (z.B. Bildung unerwünschter Phasen) zu reduzieren.

In einer Ausführungsform ist das Substrat durch die Wandung der Halterungsvorrichtung räumlich fixierbar.

In einer Ausführungsform kann der Überstand halb bis dreimal so groß sein, wie die Dicke der anzubringenden Beschichtung.

In einer weiteren Ausführungsvariante ist die Halterungsvorrichtung derart passgenau an das Substrat angepasst, dass der Abstand zwischen der Wandung der Halterungsvorrichtung und dem Substrat im Bereich der Oberseite, weniger als 0,2 mm, beträgt.

In einer Ausgestaltungsform weist insbesondere die Wandung der Halterungsvorrichtung ein Material mit geringer Schweißeignung bzgl. des verwendeten Substratwerkstoffes auf. Hierdurch kann beispielsweise verhindert werden, dass sich die Halterungsvorrichtung bei der Erwärmung durch einen Laser mit dem Substrat verbindet. Ein solches Material kann beispielsweise Kupfer, Aluminium, Messing, Bronze oder keramischen Materialen sein.

In einer weiteren Ausführungsvariante umfasst die Halterungsvorrichtung, insbesondere die Wandung, ein Material, das einen hohen Reflexionsgrad für Laserlicht besitzt. Hierdurch wird das verwendete Laserlicht bei einem generativen Laserverfahren überall dort reflektiert, wo sich Material der Halterungsvorrichtung befindet. Insbesondere an der Oberseite des Substrats wird es aber nicht reflektiert und kann somit gezielt dort wirken um ein Beschichtungsschmelzbad zu erzeugen. Auch hierbei kann beispielsweise Kupfer Messing oder Bronze eingesetzt werden. Der Werkstoff ist dabei hinsichtlich des Reflexionsgrades der Wellenlänge des Lasers auszuwählen. Insbesondere Kupfer weist bei den typischerweise eingesetzten Wellenlängen eine hohe Reflektivität auf, während das Substrat in diesem Bereich die Laserleistung gut absorbiert.

Auch ist es alternativ oder zusätzlich möglich, dass die Wandung der Halterungsvorrichtung ein Material mit hoher Wärmeleitfähigkeit umfasst, insbesondere Kupfer oder Aluminium. Damit kann eine effektive Temperierung des Substrats erreicht werden.

Zur Verbesserung der Substratkühlung kann in einer Ausführungsform die Wandung der Halterungsvorrichtung eine aktive Kühlvorrichtung zur Einstellung einer Temperatur der Wandung der Halterungsvorrichtung - und damit auch des Substrats - aufweisen. Dabei kann z.B. die Temperatur der Wandung der Halterungsvorrichtung mit einer Regelungsvorrichtung für die Kühlvorrichtung einstellbar sein. Eine Möglichkeit ist dabei, dass die Kühlvorrichtung als Flüssigkeitskühlung, insbesondere als Wasserkühlung ausgebildet ist. Wasser hat eine hohe Wärmekapazität, so dass es als Kühlmittel gut geeignet ist. Grundsätzlich ist auch eine Siedekühlung mittels Wasser oder verflüssigter Gase (z.B. Stickstoff möglich).

Insbesondere ist es damit möglich, die Wandung der Halterungsvorrichtung von Raumtemperatur bis auf mehrere Hundert Grad Celsius zu temperieren.

In einer Ausführungsform ist das Substrat ein Bauteil einer Turbomaschine, insbesondere eine Schaufel oder ein Dichtungselement.

Die Aufgabe wird auch durch ein Verfahren gemäß Anspruch 13 gelöst.

Das Verfahren weist dabei folgende Schritte auf:
a) Bereitstellen des Substrats;
b) Maskieren des Substrats mit einer Halterungsvorrichtung nach mindestens einem der Ansprüche 1 bis 12;
c) Erzeugen eines Beschichtungsschmelzbades durch Laserauftragsschweißen auf der Oberseite des Substrats;
d) Implantieren von Hartstoffpartikeln in das Beschichtungsschmelzbad und/oder der Oberseite des Substrats durch Laserauftragsschweißen, wobei das erzeugte Beschichtungsschmelzbad durch die Wandung der Halterungsvorrichtung abgestützt wird und die Wärme des Beschichtungsschmelzbades durch die Halterungsvorrichtung zumindest teilweise abgeleitet wird.

Im Folgenden wird die Erfindung anhand von Ausführungsbeispielen in Verbindung mit den Figuren beschrieben.

Es zeigen:
- Figur 1: in perspektivischer und schematischer Darstellung ein erstes Ausführungsbeispiel einer Halterungsvorrichtung, die ein Substrat vollständig einschließt;
- Figur 2: die Halterungsvorrichtung aus Figur 1 A in einem Querschnitt senkrecht zur Längsrichtung und durch den Mittelpunkt der Halterungsvorrichtung;
- Figur 3: die Halterungsvorrichtung aus Figur 1 Ain einem Querschnitt senkrecht zur Querrichtung durch den Mittelpunkt der Halterungsvorrichtung;
- Figur 4: die Halterungsvorrichtung aus Figur 1 A von oben, in einer Ebene senkrecht zur Vertikalrichtung der Halterungsvorrichtung;
- Figur 5: in perspektivischer Darstellung ein zweites Ausführungsbeispiel einer Halterungsvorrichtung, mit einer Kühlvorrichtung und einer Regelungsvorrichtung, die ein Substrat vollständig einschließt;
- Figur 6: in perspektivischer Darstellung ein drittes Ausführungsbeispiel einer Halterungsvorrichtung, bestehend aus zwei Elementen;
- Figur 7: die Halterungsvorrichtung aus Figur 5, die ein Substrat einschließt und eine Beschichtungsvorrichtung für die Beschichtung mittels generativen Laserverfahrens;
- Figur 8A bis 8C: drei nacheinander folgende Stadien während der Beschichtung einer Oberfläche des Substrats mittels generativen Laserverfahrens;
- Figur 9: zeigt in vergrößerter Darstellung die Beschichtung, bestehend aus einem Metallbad und implantierten Hartstoffpartikeln;
- Figur 10: zeigt perspektivisch ein Rotorblatt nach dem Aufbringen einer Beschichtung;
- Figur 11: zeigt eine Schnittansicht des Rotorblattes in einer Halterungsvorrichtung.

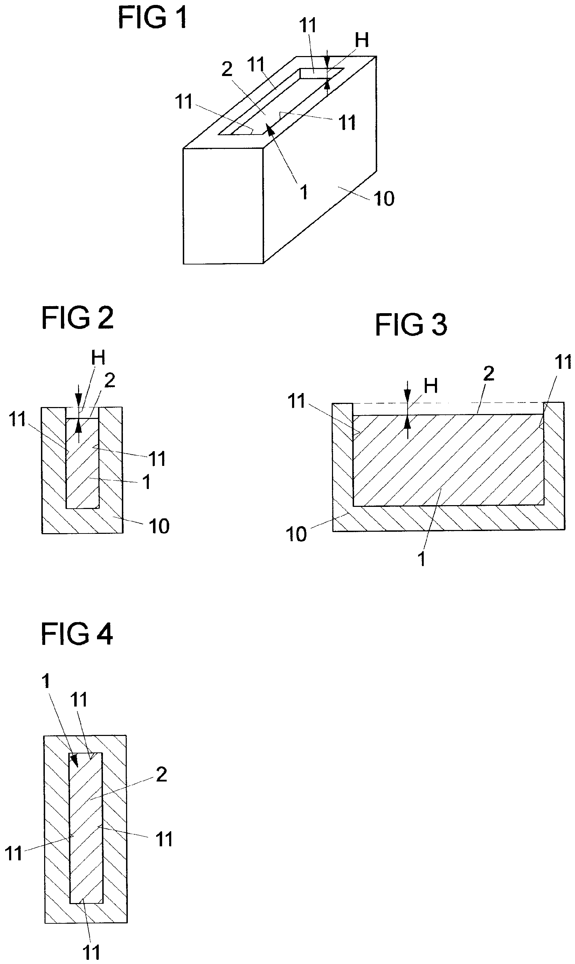

In Figur 1 ist eine erste Ausführungsvariante einer Halterungsvorrichtung 10 für ein Substrat 1 perspektivisch dargestellt. Eine Oberseite 2 des Substrates 1 soll einer Beschichtung unterzogen werden.

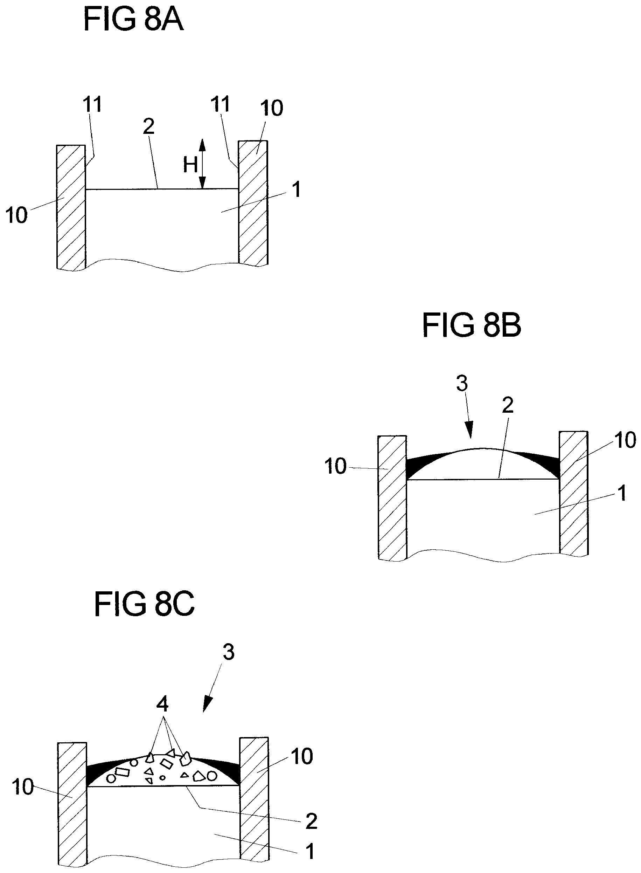

Die Halterungsvorrichtung 10 umschließt das Substrat 1 auf vier Seiten, während die Oberseite 2 des Substrats 1 mittels eines generativen Laserverfahrens (z.B. einem DLD-Verfahren) eine Beschichtung 3 (siehe z.B. Fig. 8A, 8B, 8C) erhält. Die Beschichtung 3 umfasst dabei Hartstoffpartikel 4.

Die Halterungsvorrichtung 10 ist in dieser Ausführungsvariante einstückig ausgebildet und weist eine quaderförmige äußere Kontur auf. Weiterhin weist die Halterungsvorrichtung 10 eine quaderförmige Vertiefung auf, die der Aufnahme des Substrates 1 dient.

Die quaderförmige Vertiefung ist auf vier Seiten (d.h. vollständig) von einer wärmeleitenden Wandung 11 der Halterungsvorrichtung 10 begrenzt, d.h. die Wandung 11 der Halterungsvorrichtung 10 ist im Betrieb zum Substrat 1 orientiert. Das Substrat 1 ist in seiner Ausdehnung nur minimal kleiner als die Ausdehnung der Vertiefung. Der Abstand zwischen dem Substrat 1 und der Wandung 11 der Halterungsvorrichtung 10 ist hier kleiner als 0,2 mm.

In alternativen Ausführungsformen kann die Halterungsvorrichtung 10 und auch das Substrat 1 eine andere Form aufweisen. So könnte der horizontale Querschnitt des Substrates 1 z.B. quadratisch, polyedrisch oder auch komplex geformt sein. In jedem Fall umgeben aber die Wandungen 11 der Haltevorrichtung 10 das Substrat 1 auf allen Seiten.

Figur 2 zeigt einen Querschnitt senkrecht zur Längsrichtung der Halterungsvorrichtung 10 gemäß Figur 1. Figur 3 zeigt einen Querschnitt senkrecht zur Querrichtung. In Figur 4 ist die Halterungsvorrichtung 10 gemäß Figur 1 von oben, in einer Ebene senkrecht zur Vertikalrichtung der Halterungsvorrichtung 10 dargestellt.

In den Figuren 1 bis 4 ist erkennbar, dass die Wandung 11 der Halterungsvorrichtung 10 um den Überstand H über die Oberseite 2 des Substrates 1 ragt. Die Oberseite 1 ist im Wesentlichen senkrecht zur Wandung 11 der Halterungsvorrichtung 10 ausgerichtet.

Somit ist in der Vertikalrichtung das Substrat 1 tiefergelegt. Der Überstand H bewegt sich in der Größenordnung der aufzubringenden Beschichtung 3. In einigen Ausführungsvarianten kann der Überstand H halb bis dreimal so groß sein wie die Dicke der aufzubringenden Beschichtung 3. In diesem Größenbereich des Überstandes H ist es möglich, das Beschichtungsschmelzbad an seinen Seiten abzustützen.

Die Wandung 11 kann das Substrat 1 räumlich fixieren, insbesondere während der Beschichtung des Substrats 1.

In einigen Ausführungsvarianten kann die Wandung 11 der Halterungsvorrichtung 10 ein Material aufweisen mit wenigstens einer der folgenden Eigenschaften: einer geringer Schweißneigung, einem hohen Reflexionsgrad für Laserlicht oder einer hohen Wärmeleitfähigkeit. Insbesondere kann dieses Material Kupfer sein.

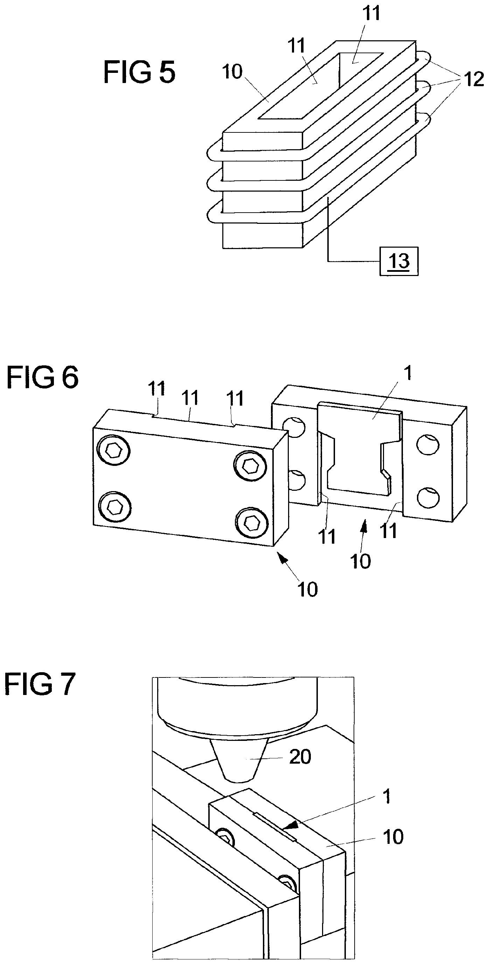

In Figur 5 ist eine Variante der Ausführungsform gemäß der Figuren 1 bis 4 dargestellt, so dass auf die obige Beschreibung Bezug genommen werden kann. Die Halterungsvorrichtung 10 weist hier zusätzlich eine aktive Kühlvorrichtung 12 auf. Die aktive Kühlvorrichtung 12 umgibt hier die Wand der Halterungsvorrichtung 10 von außen. Die Kühlvorrichtung 12 wird durch eine Regelungsvorrichtung 13 gesteuert.

In alternativen Ausführungsformen kann die Kühlvorrichtung 12 auch in die Wandung 11 der Halterungsvorrichtung 10 integriert sein. Auch ist es möglich, dass die Kühlvorrichtung 12 nur in bestimmten Teilen der Halterungsvorrichtung 10 angeordnet ist.

Bei der Kühlvorrichtung 12 kann es sich, wie in der hier dargestellten Ausführungsvariante, um eine Flüssigkeitskühlung, insbesondere eine Wasserkühlung, handeln. Durch die Kühlvorrichtung 12, beispielsweise gesteuert durch die Regelungsvorrichtung 13, kann einen Temperatur der Wandung 11 der Halterungsvorrichtung 10 eingestellt werden. Beispielsweise ist die Wandung 11 der Haltungsvorrichtung 10 auf Raumtemperatur temperierbar.

Außer der Temperatur kann auch der Temperaturverlauf durch die Regelungsvorrichtung 13 eingestellt werden, damit eine gezielte Abkühlung möglich ist.

In einer weiteren Ausführungsvariante, die in Figur 6 dargestellt ist, besteht die Halterungsvorrichtung 10 aus zwei Hälften, die - hier durch Schraubverbindungen - miteinander verbindbar sind. Hierdurch wird die Aufnahme an Substrat 1 in einer Vertiefung der Halterungsvorrichtung 10 vereinfacht. Das Substrat 1 kann zwischen den beiden spiegelsymmetrischen Hälften der Halterungsvorrichtung 10 eingespannt werden.

In Figur 7 ist die Halterungsvorrichtung 10 aus Figur 6 dargestellt, so dass auf die obige Beschreibung Bezug genommen werden kann. Dabei ist zusätzlich eine Vorrichtung 20 dargestellt, die zur Beschichtung der Oberfläche 2 des Substrats 1 mittels generativen Laserverfahrens dient. Die Beschichtungsvorrichtung 20 umfasst hierbei einen Laser sowie Pulverzuführungsmittel.

Der Laser dient zum Erzeugen eines Beschichtungsschmelzbades an der Oberfläche 2 des Substrats 1. Ein erstes Pulverzuführungsmittel dient zur Zuführung eines ersten Pulvers, insbesondere MCrAlY, zum Erzeugen des Beschichtungsschmelzbades. Das zweite Zuführungsmittel dient zur Zufuhr von Hartstoffpartikeln 4, insbesondere cBN-Partikeln.

Im Zusammenhang mit den Figuren 8A bis 8C ist dargestellt, wie in einer Ausführungsform die Beschichtung der Oberfläche 2 des Substrats 1 erfolgt. In allen drei Figuren ist jeweils die Halterungsvorrichtung 10, mit dem eingeschlossenen Substrat 1, gemäß Figur 1 im Querschnitt senkrecht zur Längsrichtung ausschnittsweise dargestellt.

Bei einem Verfahren zur Beschichtung einer Oberseite 2 eines Substrates 1 muss zunächst das Substrat 1 bereitgestellt werden. Als nächstes wird das Substrat 1 mit einer Halterungsvorrichtung 10 maskiert. Diese Situation ist in Figur 8A dargestellt.

Daraufhin wird mittels Laserauftragsschweißens, also unter Verwendung eines Lasers und unter Zuführung eines ersten Pulvers, ein Beschichtungsschmelzbad auf der Oberseite 2 des Substrats 1 erzeugt. Der Laser dient zum lokalisierten Aufschmelzen zunächst der Oberseite 2 des Substrates 1. In dieses Schmelzbad wird das Pulver eingebracht. Das Pulver wird wiederum durch den Laser geschmolzen, wobei weiteres Pulver zugeführt wird. Das Ergebnis davon ist in Figur 8B dargestellt.

In einem nächsten Schritt werden Hartstoffpartikel 4 in das Beschichtungsschmelzbad und/oder in die Oberseite 2 des Substrats 1, durch Laserauftragsschweißen implantiert. Die Hartstoffpartikel 4 werden hierbei größtenteils nicht geschmolzen. Das verfestigte Beschichtungsschmelzbad bildet die Beschichtung 3 der Oberseite 2 des Substrats 1 aus. Dies ist in Figur 8C dargestellt.

Die Halterungsvorrichtung 10 stützt das erzeugte Beschichtungsschmelzbad durch den Überstand H der Wandung 11 ab, so dass die Beschichtung 3 im Querschnitt senkrecht zur Vertikalrichtung, also im horizontalen Querschnitt, die Form des Substrats aufweist.

Die Wärme des Beschichtungsschmelzbades wird durch die Halterungsvorrichtung 10 zumindest teilweise abgeleitet.

Bei Ausführungsvarianten der Halterungsvorrichtung 10, die eine aktive Kühlvorrichtung 12 umfassen, kann die Temperatur der Halterungsvorrichtung 10 gezielt eingestellt werden. Dies kann dazu verwendet werden, um die Wärmeableitung gezielt zu steuern.

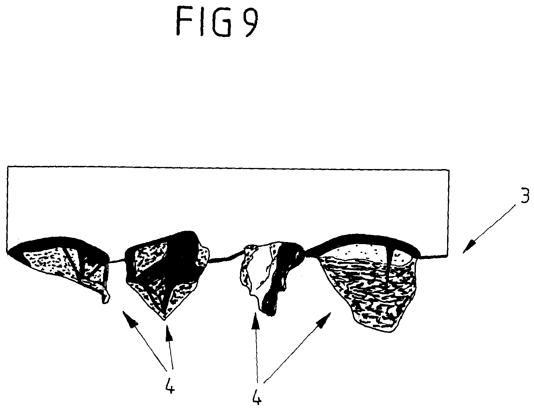

Wie in Figur 9 dargestellt ist, weist eine derartig hergestellte Beschichtung 3, bestehend aus einem Metallbad und darin implantierten Hartstoffpartikeln 4 keine Glasphasen auf. Die Hartstoff partikel 4 sind direkt mit dem Metallbad verbunden.

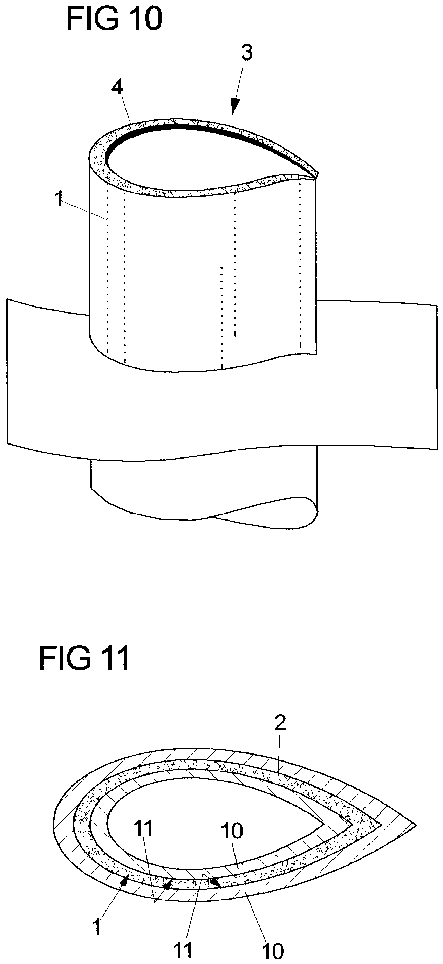

In Figur 10 ist ein Rotorblatt 1 einer Turbomaschine in perspektivischer Ansicht dargestellt, nachdem eine Beschichtung 3 auf einer Oberseite 2 des Rotorblatts 1, der Rotorspitze, aufgebracht wurde. Die Form eines Rotorblattes ist komplex, da sich z.B. der Querschnitt in jeder Höhe ändert. Eine Halterungsvorrichtung 10 für ein solch komplex geformtes Teil weist Wandungen 11 auf, die dementsprechend geformt ist. Dabei geht es vor allem darum, die Beschichtung auf die Schaufelspitzen aufzutragen.

Diese Anordnung ist in Figur 11 von oben, in einer Schnittebene senkrecht zur Vertikalachse bzw. Radialachse der Rotorschaufel 2, dargestellt.

In diesem Querschnitt weist die Rotorschaufel 2 eine Kontur auf, welche aus einer Wand besteht und einen Hohlraum umschließt. Die innere, wie auch äußere Wandung der Rotorschaufel 2 ist zumindest im Bereich der Oberfläche 2, also im Bereich der Rotorspitze, jeweils von einer Wandung 11 der Halterungsvorrichtung 10 umgeben.

Somit besteht auch in dieser Ausführungsvariante die Halterungsvorrichtung 10 aus zwei Teilen. Beide Teile sind jeweils entsprechend der Rotorschaufel konturiert ausgebildet. Ein Teil passt genau in das Innere der Rotorschaufel und ein Teil passt genau um den äußeren Umfang der Rotorschaufel herum.

In weiteren Ausführungsvarianten, die hier nicht dargestellt sind, können also Haltungsvorrichtung 10 an weitere Konturen einer zu beschichteten Oberseite 2 eines Substrats 1 angepasst sein.

Bezugszeichen
- 1: Substrat (Rotorblatt)
- 2: Oberseite
- 3: Beschichtung
- 4: Hartstoffpartikel

- 10: Halterungsvorrichtung
- 11: Wandung der Halterungsvorrichtung
- 12: Kühlvorrichtung
- 13: Regelungsvorrichtung

- 20: Beschichtungsvorrichtung

- H: Überstand

## Patentansprüche

1. Halterungsvorrichtung (10) für ein Substrat (1) während der Ausführung eines generativen Laserverfahrens zum Aufbringen einer Beschichtung (3) umfassend Hartstoffpartikel (4), auf einer Oberseite (2) des Substrates (1) **dadurch gekennzeichnet, dass**
- die Wandung des Substrats (1), wenigstens im Bereich der Oberseite (2), vollständig von einer wärmeleitenden Wandung (11) der Halterungsvorrichtung (10) umgeben ist,
- die Wandung (11) der Halterungsvorrichtung (10) über die Oberseite (2) mit einem Überstand (H) hervorsteht, der mindestens in der Größenordnung der Dicke der Beschichtung (3) liegt und
- die Wandung (11) der Halterungsvorrichtung (10) senkrecht zur Oberseite (2) angeordnet ist, so dass ein laserinduziertes Beschichtungsschmelzbad durch die Wandung (11) der Halterungsvorrichtung (10) abstützbar ist und die Beschichtung (3) im horizontalen Querschnitt die Form des Substrats (1) aufweist.

2. Halterungsvorrichtung nach Anspruch 1, **dadurch gekennzeichnet, dass** das Substrat (1) durch die Wandung (11) der Halterungsvorrichtung (10) räumlich fixierbar ist, insbesondere während der Beschichtung des Substrats (1).

3. Halterungsvorrichtung nach Anspruch 1 oder 2, **dadurch gekennzeichnet, dass** der Überstand (H) halb bis zu dreimal so hoch ist wie die Dicke der Beschichtung (3).

4. Halterungsvorrichtung nach mindestens einem der vorhergehenden Ansprüche, **dadurch gekennzeichnet, dass** der Abstand zwischen dem Substrat (1) und der Wandung (11) der Halterungsvorrichtung (10) im Bereich der Oberseite (2) kleiner als 0,2 mm ist.

5. Halterungsvorrichtung nach mindestens einem der vorhergehenden Ansprüche, **dadurch gekennzeichnet, dass** insbesondere die Wandung (11) der Halterungsvorrichtung (10) ein Material mit geringer Schweißneigung aufweist, insbesondere Kupfer.

6. Halterungsvorrichtung nach mindestens einem der vorhergehenden Ansprüche, **dadurch gekennzeichnet, dass** insbesondere die Wandung (11) der Halterungsvorrichtung (10) ein Material mit einem hohen Reflexionsgrad für Laserlicht aufweist, insbesondere Kupfer.

7. Halterungsvorrichtung nach mindestens einem der vorhergehenden Ansprüche, **dadurch gekennzeichnet, dass** insbesondere die Wandung (11) der Halterungsvorrichtung (10) ein Material mit hoher Wärmeleitfähigkeit umfasst, insbesondere Kupfer.

8. Halterungsvorrichtung nach mindestens einem der vorhergehenden Ansprüche, **dadurch gekennzeichnet, dass** die Wandung (11) der Halterungsvorrichtung (10) eine aktive Kühlvorrichtung (12) zur Einstellung einer Temperatur der Wandung (11) der Halterungsvorrichtung (10) aufweist.

9. Halterungsvorrichtung nach Anspruch 8, **dadurch gekennzeichnet, dass** die Temperatur der Wandung (11) der Halterungsvorrichtung (10) mit einer Regelungsvorrichtung (13) für die Kühlvorrichtung (12) einstellbar ist.

10. Halterungsvorrichtung nach einem der Ansprüche 8 und 9, **dadurch gekennzeichnet, dass** die Kühlvorrichtung (12) als Flüssigkeitskühlung, insbesondere als Wasserkühlung ausgebildet ist.

11. Halterungsvorrichtung nach mindestens einem der vorhergehenden Ansprüche, **dadurch gekennzeichnet, dass** die Wandung (11) der Halterungsvorrichtung (10) auf Raumtemperatur temperierbar ist.

12. Halterungsvorrichtung nach mindestens einem der vorhergehenden Ansprüche, **dadurch gekennzeichnet, dass** das Substrat (1) ein Bauteil einer Turbomaschine, insbesondere eine Schaufel oder ein Dichtungselement, ist.

13. Verfahren zur Beschichtung einer Oberseite (2) eines Substrats (1), insbesondere eines Bauteils einer Turbomaschine, folgende Schritte umfassend:
a) Bereitstellen des Substrats (1);
b) Maskieren des Substrats (1) mit einer Halterungsvorrichtung (10) nach mindestens einem der Ansprüche 1 bis 12;
c) Erzeugen eines Metallbades durch Laserauftragsschweißen auf der Oberseite (2) des Substrats (1);
d) Implantieren von Hartstoffpartikeln (4) in das Metallbad und/oder der Oberseite (2) des Substrats (1) durch Laserauftragsschweißen, wobei das hierdurch erzeugte Beschichtungsschmelzbad durch die Wandung (11) der Halterungsvorrichtung (10) abgestützt wird und die Wärme des Beschichtungsschmelzbades durch die Halterungsvorrichtung (10) zumindest teilweise abgeleitet wird.
